# FASCICULE DE BREVET EUROPEEN

(11) **EP 1 074 482 B1**
(45) Date de publication et mention de la délivrance du brevet: **17.12.2003**
(21) Numéro de dépôt: 00120089.8
(22) Date de dépôt: 28.11.1996
(51) Int. Cl.: B65D 77/20

(54) **Structure d'obturation pour un contenant**
Abdichtungsstruktur für einen Behälter
Container sealing assembly

(30) Priorité: 29.11.1995 FR 9514117
(43) Date de publication de la demande: 07.02.2001
(62) Demande divisionnaire de: 96941070.3
(73) Titulaire: SOPLARIL SA, 92500 Rueil Malmaison (FR)
(72) Inventeur: Engelaere, Jean-Claude, 59210 Coudekerque (FR)
(74) Mandataire: Cabinet Hirsch

(56) Documents cités:
- EP-A- 0 160 975
- EP-A- 0 262 652
- EP-A- 0 554 152
- WO-A-93/08982
- DE-C- 3 613 155
- DE-U- 9 114 409
- FR-A- 2 669 607
- FR-A- 8 802 774
- GB-A- 1 461 698
- GB-A- 1 536 428
- GB-A- 2 319 746
- US-A- 3 335 939
- US-A- 3 650 386
- US-A- 3 946 872
- US-A- 4 280 653
- US-A- 4 381 848
- US-A- 4 438 850
- US-A- 4 582 555
- US-A- 4 673 601
- US-A- 4 693 390
- US-A- 4 801 041
- US-A- 4 858 780
- US-A- 4 913 307
- US-A- 4 944 409
- US-A- 5 061 532
- US-A- 5 089 320
- US-A- 5 145 737
- US-A- 5 382 472
- MENGES, GEORG: "Werkstoffkunde Kunststoffe", 1990, CARL HANSER VERLAG, MüNCHEN WIEN
- ERNST, URS: 'Optimierung des Siegelvorganges beim Heißsiegeln von Verpackungsfolien' VERPACKUNGS-RUNDSCHAU vol. 36, no. 1, 1985, pages 1 - 7
- HOHMANN, H.J. ET MONDERLEIN, W.: 'Einfluß der Gestaltung der Siegelbackenoberfläche auf die Festigkeit und Dichtigkeit von Heißsiegelnähten' VERPACKUNGS-RUNDSCHAU vol. 36, no. 12, 1985, pages 81 - 90
- MICHAELI, WALTER: "Einführung in die Kunststoffverarbeitung", 1992, CARL HANSER VERLAG, MüNCHEN WIEN
- Römpp, Chemie-Lexikon, 9. Auflage, 1995, Stichwort "Versprödung", p.4909 et Stichwort "Klebstoffe" avec Tableaux, pp.2253-2255
- BIERWERTH, WALTER: "Tabellenbuch Chemietechnik", 1999, VERLAG EUROPA-LEHRMITTEL, HAAN-GRUITEN
- ASKELAND, D.R.: "Materialwissenschaften", 1996, SPEKTRUM AKADEMISCHER VERLAG, HEIDELBERG, BERLIN, OXFORD
- WELLINGER, K., KRÄGELOH, E.: "WERKSTOFFE UND WERKSTOFFPRÜFUNG", DEUTSCHE VERLAGS-ANSTALT, STUTTGART, 1992, page 296
- "Product Information, Surlyn 1650", Dupont, 2001, http://www.dupont.com/packaging/products/resins- /H-23731-2/H-23731-2.html
- "Selector Guide, Elvax", Dupont, 2001, http://www.dupont.com/packaging/products/resins- /H-42043/H-42043.html

## Description

L'invention est relative à une structure d'obturation pour un contenant muni d'une ouverture, structure du genre de celles qui comprennent une feuille soudée suivant le bord de l'ouverture du contenant.

Pour des raisons économiques et de recyclage, les produits sont conditionnés en quantités de plus en plus importantes dans un même contenant, en particulier dans un même emballage. Ceci est à la source de problèmes pour le consommateur qui ne souhaite pas utiliser en une seule fois le produit conditionné. Après avoir ouvert le contenant pour prélever une partie du contenu, le consommateur souhaite pouvoir refermer facilement et efficacement le contenant et retrouver en partie son intégrité initiale d'avant ouverture. Par exemple, dans le cas de produits alimentaires, le consommateur souhaite pouvoir refermer l'emballage avant de le replacer dans son réfrigérateur pour éviter des problèmes d'odeur, de dessèchement du produit conditionné, de perte de place et autres inconvénients.

Ceci est également vrai pour des produits autres que les produits alimentaires, par exemple pour des produits industriels conditionnés en grand nombre tels que les vis, clous, rondelles, ainsi que pour les produits pharmaceutiques par exemple sous forme de pilules ou cachets.

Ces exemples non limitatifs montrent qu'il existe une demande importante, dans des domaines très variés, pour une structure d'obturation pour contenants permettant une ouverture facile et une nouvelle fermeture efficace et simple du contenant après le prélèvement d'une partie de son contenu.

L'invention a donc pour but de fournir une structure d'obturation qui satisfait à ces exigences.

L'invention a également pour but de fournir une structure d'obturation qui soit relativement simple et économique à fabriquer et à mettre en place sur le contenant.

La couche extérieure peut être constituée par un film souple son épaisseur peut être d'environ 50 micro-mètres. La couche extérieure est avantageusement réalisée en polyester bi-orienté.

En variante, la couche extérieure peut être constituée par un film rigide.

La couche soudante est constituée par un film de faible épaisseur, en particulier de l'ordre de 20 micro-mètres, facile à déchirer ou d'une épaisseur plus importante présentant des propriétés de déchirure facile obtenues par l'ajustement des paramètres d'extrusion ou par l'ajout de charges minérales.

Le document US-A-3650386 décrit une structure d'obturation comprenant une couche soudante formant barrière, une couche d'adhésif permanent et une couche support en un matériau moussé. La soudure est mise en oeuvre par des mâchoires, l'une étant chauffante appliquée côté contenant et l'autre non.

L'invention fournit une structure d'obturation pour un contenant muni d'une ouverture, comprenant une feuille soudée suivant le bord de l'ouverture du contenant, la feuille étant constituée d'au moins trois couches, à savoir une couche soudante appliquée et soudée suivant un cordon de largeur L contre le bord de l'ouverture, une couche extérieure formant barrière et une couche adhésive intermédiaire, la couche soudante ayant subi une fragilisation dans la région du cordon, la soudure du cordon de la couche soudante sur le bord de l'ouverture présentant une résistance à l'arrachement supérieure à la force d'adhésion entre couche soudante et couche adhésive de sorte qu'à la première opération de dégagement de l'ouverture le cordon soudé de la couche soudante reste en place sur le bord de l'ouverture et se sépare par déchirure du reste de la couche soudante et de la couche adhésive, laquelle est ainsi découverte sur une zone correspondant au dit cordon, la fermeture du contenant pouvant être effectuée à nouveau par application de la zone découverte de la couche adhésive contre le cordon de la couche soudante restée en place,
caractérisée en ce que ladite couche adhésive intermédiaire est formée par un dépôt de résine d'épaisseur minimale de 10 micromètres, et en ce que la fragilisation de ladite couche soudante dans la région du cordon, est réalisée par la soudure du cordon par pression et mise en fusion par une barrette de soudure de manière à déformer la couche soudante et la couche adhésive, et en ce que la nature de la couche extérieure est telle qu'elle ne subit pas de fusion et est très peu déformée de manière permanente.

A titre d'exemple, la couche soudante peut être constituée par un film de polyéthylène haute densité.

La couche adhésive est formée de préférence par un dépôt d'épaisseur au moins égale à 10 micromètres. Cette couche adhésive est formée, en particulier, par un polymère acrylique à effet collant permanent, sous forme solide à température ambiante, ou par un adhésif "Hot melt" sur une base d'un élastomère thermoplastique.

Les matières composant les couches sont avantageusement conformes aux législations définissant l'emploi d'adhésifs dans le cadre du conditionnement de produits alimentaires . Les couches peuvent être transparentes de sorte que la feuille de la structure est elle-même transparente.

L'invention est également relative à un contenant fermé par une telle structure d'obturation. Le contenant peut être formé par un film rigide ou par un film souple. Dans un exemple de réalisation, le contenant est réalisé à partir d'un film de PVC (polychlorure de vinyle) rigide recouvert intérieurement par un film de polyéthylène linéaire avec interposition entre les deux films d'une couche de colle polyuréthane.

L'invention fournit encore un procédé d'obturation d'un contenant muni d'une ouverture par une feuille soudée suivant le bord de l'ouverture, dans lequel on utilise une feuille constituée d'au moins trois couches, à savoir une couche soudante à appliquer contre le bord de l'ouverture, une couche extérieure formant barrière et une couche adhésive intermédiaire, et qu'on réalise la soudure de la couche soudante sur le bord de l'ouverture suivant un cordon de largeur L présentant une résistance à l'arrachement supérieure à la force d'adhésion entre couche soudante et couche adhésive, de sorte qu'à la première opération de dégagement de l'ouverture du contenant, le cordon soudé de la couche soudante reste en place sur le bord de l'ouverture et se sépare essentiellement par déchirure du reste de la couche soudante et de la couche adhésive,
caractérisé en ce que ladite couche adhésive intermédiaire est formée par un dépôt de résine d'épaisseur minimale de 10 micromètres, et en ce que la soudure est effectuée par pression et mise en fusion par une barrette de soudure de manière à provoquer une fragilisation par déformation de la couche soudante et de la couche adhésive dans la région du cordon, et en ce que la nature de la couche extérieure est telle qu'elle ne subit pas de fusion et est très peu déformée de manière permanente.

On peut préparer la feuille constituée d'au moins trois couches en déposant la couche adhésive entre les couches extérieure et soudante par extrusion à chaud d'une résine adhésive entre ces couches.

Selon une autre possibilité on dépose à chaud la résine adhésive sur la couche extérieure avant de calandrer la couche soudante sur celle-ci.

La feuille ainsi préparée peut être stockée sous forme enroulée car la couche soudante assure la protection de la couche adhésive et permet d'éviter des problèmes de collage spire à spire dans les bobines de feuille.

L'invention consiste, mises à part les dispositions exposées ci-dessus, en un certain nombre d'autres dispositions dont il sera plus explicitement question ci-après à propos d'exemples de réalisation décrits avec références aux dessins ci-annexés mais qui ne sont nullement limitatifs.

La Figure 1, de ces dessins, est une coupe schématique transversale, fortement agrandie, d'une feuille constituée de trois couches pour une structure d'obturation selon l'invention.

La Figure 2 est une coupe schématique, semblable à la Figure 1, illustrant l'opération de soudure de la feuille sur le bord d'un contenant.

La Figure 3 est une coupe schématique, semblable à la Figure 2, illustrant l'opération d'ouverture du contenant et la séparation du cordon de la couche soudante qui demeure sur le bord du contenant.

La Figure 4 est une coupe schématique fortement agrandie avec parties supprimées, d'un contenant fermé par une structure d'obturation selon l'invention.

La Figure 5 montre, semblablement à la Figure 4, le contenant et la structure d'obturation après ouverture.

La Figure 6 est un diagramme représentant les variations de la viscosité, portées en ordonnée, en fonction de la température portée en abscisse d'un polymère acrylique utilisé comme résine adhésive.

La Figure 7 est un diagramme donnant les variations de la force d'adhésion entre deux films appliqués l'un contre l'autre sous une pression déterminée, avec une couche intermédiaire de résine adhésive à base de polymère acrylique, en fonction du temps de contact, exprimé en minutes, porté en abscisse.

La Figure 8, enfin, est un diagramme illustrant les variations de la force de décollement d'une résine adhésive à base de polymère acrylique, exprimées en newton/centimètre (N/cm), entre les deux films de polyester évoqués à propos de la Figure 7, en fonction du temps porté en abscisse et exprimé en semaines.

On rappellera tout d'abord les caractéristiques de l' adhésif "Hot melt" sur la base d'un élastomère thermoplastique:
- solide à température ambiante
- point de fusion compris entre 85 et 95°C
- masse volumique : 0,96 g/cm³
- viscosité dynamique :
   à 150°C 15 100 mPa.s
   à 160°C 11 100 mPa.s
   à 170°C 8 000 mPa.s
( mesures faites sur RHEOMAT 115 Contraves)
- insoluble dans l'eau.

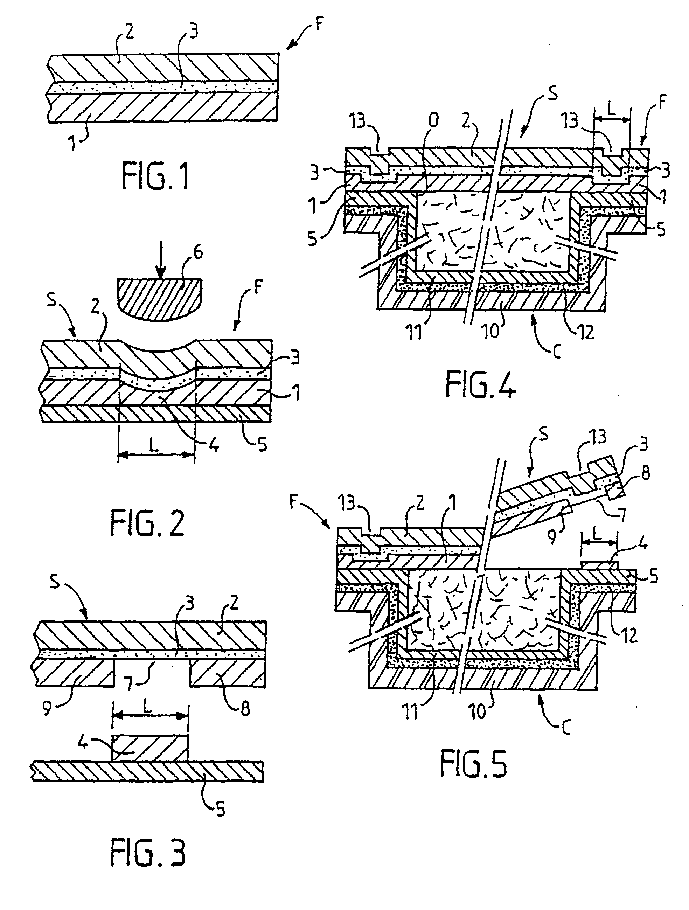

En se reportant aux dessins, notamment aux Figures 1 et 4, on peut voir que la structure d'obturation S pour un contenant C muni d'une ouverture O comprend une feuille F constituée d'au moins trois couches à savoir une couche soudante 1, une couche extérieure 2 et une couche adhésive intermédiaire 3.

La couche extérieure 2 est composée d'un film constituant un "support", qui assure à la structure :
- ses propriétés de barrière (imperméabilité au gaz, à la vapeur d'eau, aux arômes, ...) ;
- ses propriétés mécaniques (rigidité, résistance à la perforation, résistance à l'éclatement, ...) ;
- sa tenue thermique (résistance à la chaleur, au froid, à l'extrusion-couchage, ...) ;
- son inertie vis-à-vis du milieu ambiant ;
- sa stabilité dimensionnelle, importante en particulier pour l'impression d'un texte et/ou d'images ;
- ses propriétés optiques, telles que la brillance ;
- son aptitude au traitement par une machine.

La couche extérieure peut être formée d'un film souple ou rigide suivant le type de contenant C, en particulier suivant le type d'emballage considéré.

La couche soudante 1 est destinée à assurer la fermeture du contenant C. La nature de cette couche 1 est choisie en fonction de :
- son aptitude au soudage sur elle-même ou sur un autre matériau ;
- une plage d'aptitude à la soudure la plus large possible afin de faciliter le passage en machine ;
- une aptitude à la soudure dans des zones souillées, par exemple par des graisses ;
- sa résistance chimique aux produits conditionnés dans le contenant C.

La couche soudante 1 présente une déchirure facile pour permettre une ouverture aisée du contenant C. Cette facilité de déchirure est obtenue en utilisant, par exemple, pour la couche soudante 1 un film de faible épaisseur, de l'ordre de 20 micromètres ou un film plus épais offrant des propriétés de déchirure facile obtenues, par exemple, par l'ajustement des paramètres d'extrusion ou par l'ajout de charges minérales. Selon les remarques qui précèdent, la matière du film constituant la couche soudante 1 est définie en fonction de la couche utilisée pour la soudure sur le bord du contenant C, comme expliqué plus loin.

La couche adhésive 3 assure la liaison entre la couche extérieure 2 et la couche soudante 1. La couche adhésive 3 est choisie de manière à conférer à la structure la possibilité d'être refermée, après ouverture, grâce aux propriétés de collage quasi permanentes de la couche adhésive, comme expliqué plus loin.

La couche adhésive 3 peut être déposée, par exemple, entre la couche extérieure 2 et la couche soudante 1 par :
- une technique d'extrusion (par exemple extrusionlamination) qui consiste à extruder à chaud une résine adhésive entre les films composant respectivement la couche extérieure 2 et la couche soudante 1 ;
- une technique de lamination qui consiste à déposer à chaud une résine adhésive sur le film constituant la couche extérieure 2 avant de calandrer la couche soudante 1 sur celui-ci.

Il convient d'assurer, pour la couche adhésive 3, un dépôt d'épaisseur minimale de 10 micromètres. En dehors des deux procédés évoqués précédemment, on peut utiliser tout procédé permettant de réaliser un tel dépôt.

Le choix de la résine adhésive est important pour permettre de refermer efficacement le contenant après la première ouverture.

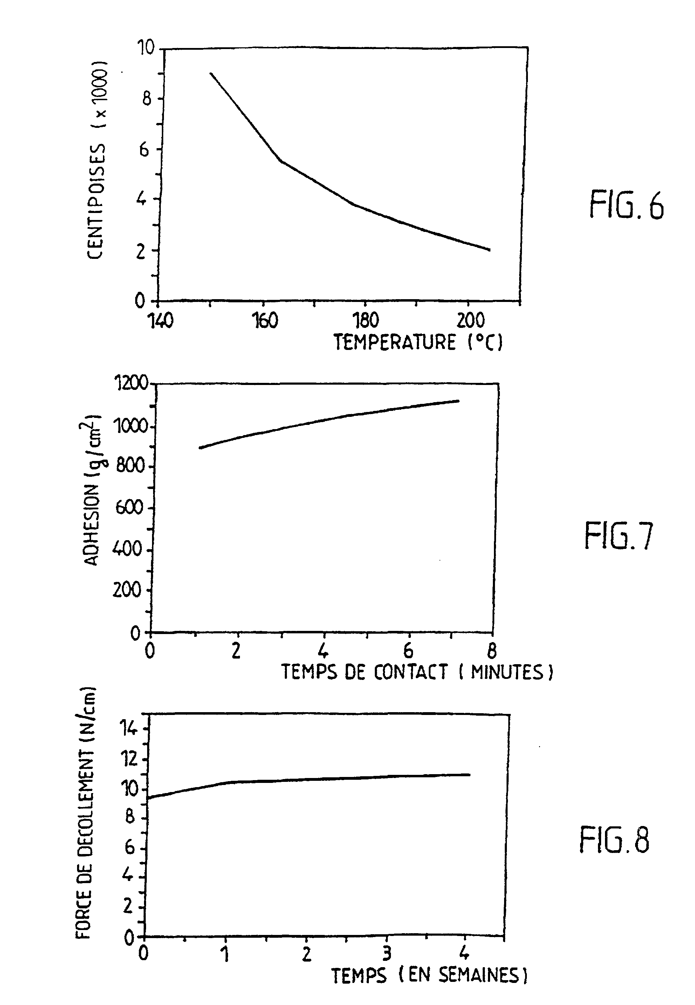

Une résine avantageuse est constituée par un polymère acrylique ayant un effet collant permanent qui se présente sous une forme solide à la température ambiante et ou par un adhésif "Hot melt" sur une base d'un élastomère thermoplastique. La Figure 6 du dessin illustre les variations de la viscosité, portées en ordonnée et exprimées en milliers de centipoises, du polymère acrylique en fonction de la température portée en abscisse et exprimée en degrés C. Une transition vitreuse se situe à 65°C et le point de fusion se situe entre 70 et 80°C.

Dans le cas du polymère acrylique, un contrôle de la qualité de la résine adhésive peut se faire en disposant une couche de 50 micromètres d'adhésif, à une température de 180°C, sur un film de polyester (connu sous le nom de "mylar"). La méthode de mesure consiste à appliquer sur le film de polyester revêtu de cette couche d'adhésif, un second film de polyester (également en "mylar") et à appliquer une pression déterminée, de 10 bars (10.10⁵ Pa) sur une surface carrée de 8 x 8 mm durant un temps d'application donné. On trace la courbe "adhésion", portée en ordonnée en fonction du "temps de contact" porté en abscisse. Pour que la résine adhésive soit considérée comme satisfaisante, il convient d'obtenir une courbe similaire à celle de la figure 7 où l'adhésion, portée en ordonnée, est exprimée en grammes force/cm², c'est-à-dire en 0,01 Newton/cm².

Les forces d'adhésion obtenues permettent de refermer le contenant, après ouverture, et de garantir son intégrité.

Le diagramme de la Figure 8 illustre les variations de la force de décollement du polymère acrylique entre les deux films de polyester utilisés dans la méthode de contrôle en fonction du temps exprimé en semaines et porté en abscisse. La force de décollement, portée en ordonnée, est exprimée en Newton/cm. L'obtention d'un palier sensiblement horizontal au bout d'une semaine montre le collage permanent de la résine. La force d'adhésion ne se dégrade donc pas dans le temps.

Pour fermer le contenant C, la structure S définie par la feuille F à au moins trois couches, est soudée suivant un cordon 4 (Figure 2) de largeur L, sur le bord d'un film 5, souple ou rigide selon le type de contenant C considéré. Le film 5 peut être souple par exemple dans le cas où le contenant C est constitué par une poche flexible ; le film 5 peut être rigide par exemple dans le cas où le contenant C est constitué par une barquette comme décrit plus loin à propos des Figures 4 et 5.

Les paramètres de soudure (pression, température et temps) sont réglés en fonction de la nature de la couche soudante 1 et de la couche pour soudure conjuguée prévue sur le film 5. La soudure est réalisée à l'aide d'une barrette 6 chauffante propre à exercer un serrage de la feuille F contre le film 5 dans la zone du cordon 4. La feuille F va subir une déformation momentanée au cours de la soudure, conduisant à des déformations permanentes qui demeurent après retrait de la barrette 6. Du fait de la nature de la couche extérieure 2, celle-ci ne subit pas de fusion et est très peu déformée de manière permanente. Par contre, la couche soudante 1 subit un maximum de déformation du fait de sa mise en fusion et de la pression exercée par la barrette de soudure 6. Il en est de même pour la couche adhésive 3. On obtient ainsi une fragilisation de la couche soudante 1 et de la couche adhésive 3 dans la région du cordon 4.

Les paramètres de soudure, et les paramètres relatifs à la liaison entre la couche adhésive 3 et la couche soudante 1, ainsi qu'avec la couche extérieure 2, sont choisis de sorte que la soudure du cordon 4 de couche soudante sur le bord du film 5 du contenant présente une résistance à l'arrachement supérieure à la force d'adhésion entre la couche soudante 1 et la couche adhésive 3. En outre, la couche adhésive 3 adhère fortement à la couche extérieure 2.

Dans ces conditions, à la première opération de dégagement de l'ouverture du contenant, en écartant la feuille F du film 5 du contenant, le cordon soudé 4 de la couche soudante reste en place sur le bord du film 5, comme illustré sur la Figure 3 et se sépare du reste de la couche soudante 1 et de la couche adhésive 3 qui est ainsi découverte sur une zone 7 correspondant au cordon 4.

Le cordon 4 est situé entre la limite extérieure et la limite intérieure du bord du film 5 de telle sorte que la zone 7 découverte de la couche 3 est comprise entre une bande extérieure 8 et une nappe intérieure 9 de couche soudante continuant à assurer une protection de la couche adhésive.

La fermeture du contenant C, après une première opération d'ouverture, peut être effectuée à nouveau en appliquant la zone découverte 7 de la couche adhésive contre le cordon 4 de couche soudante restée en place sur le bord du film 5 du contenant. La couche adhésive 3 recolle à cette partie 4 de la couche soudante et on obtient de nouveau l'intégralité de l'emballage. Cette opération peut être reproduite plusieurs fois sans dégradation du système.

Le repositionnement des films dans la zone de soudure peut être facilité en choisissant, pour la couche extérieure 2 de la feuille F, un film "support" offrant une bonne rigidité. L'adhésion entre la partie 7 de la couche adhésive dégagée et le cordon 4 de la couche soudante restée sur le bord du contenant sera d'autant plus forte que la pression exercée lors de la nouvelle fermeture sera importante.

Les couches composant la feuille F peuvent être transparentes ce qui permet d'obtenir une transparence d'ensemble de la feuille F pour le cas où l'on souhaite voir le produit conditionné à l'intérieur du contenant.

Les Figures 4 et 5 illustrent un exemple de réalisation d'un contenant C constitué par un emballage destiné au conditionnement de lardons (produit alimentaire) sous gaz. L'emballage est composé :
- de la structure d'obturation S, également appelée opercule, conforme à l'invention décrite précédemment ;
- d'un contenant C inférieur constitué par un film thermo-formé sous la forme d'une coque destinée à recevoir les lardons avant fermeture de l'emballage.

La structure d'obturation S était composée de :
- la couche extérieure 2 réalisée en polyester bi-orienté, d'une épaisseur de 50 micromètres ;
- une couche adhésive 3, réalisée avec le polymère acrylique défini précédemment, ou l'adhésif sur une base d'élastomère thermoplastique, d'une épaisseur de 10 micromètres ;
- une couche soudante 1 réalisée en polyéthylène haute densité d'une épaisseur de 20 micromètres.

Cette structure a été fabriquée sur une machine connue sous le nom de "Hot Melt".

Le polymère acrylique ou l'adhésif "Hot melt" sur une base d'élastomère thermoplastique a été couché à une température de 180°C sur le film de polyester bi-orienté de 50 micromètres constituant la couche extérieure 2. La vitesse de la ligne a été ajustée pour obtenir un dépôt de polymère acrylique d'une épaisseur de 10 micromètres. Le film de polyéthylène haute densité de 20 micromètres, constituant la couche soudante 1, a été ensuite calandré sur la couche adhésive 3 avec une pression de l'ordre de 10 bars (10.10⁵ Pa). La feuille F à trois couches ainsi obtenue a été enroulée sous forme d'une bobine et stockée pendant sept jours avant son utilisation (période de stérilisation).

Le film utilisé pour fabriquer le contenant C est constitué d'un film rigide 10 de PVC (polychlorure de vinyle) d'une épaisseur de 450 micromètres contrecollé sur un film 11 de polyéthylène linéaire d'une épaisseur de 50 micromètres, situé à l'intérieur du contenant. Le contre-collage était assuré par une couche 12 de colle polyuréthane bi-composant en milieu solvant correspondant à une épaisseur voisine de 2 micromètres.

Le conditionnement a été réalisé sur une machine à thermoformer avec réalisation d'une soudure dans la zone périphérique 13 du type cordon, d'une largeur L de 5 mm, pouvant assurer une réinjection de gaz.

Les paramètres de thermoformage du film rigide inférieur formé par l'ensemble 10-11-12 étaient les suivants :
- température de pré-chauffage = 150°C durant 1,7 secondes
- pression de placage du film = 1,8 bars (1,8.10⁵ Pa)
- temps de formage = 1,7 secondes
- pression de formage = 2,8 bars (2,8 x 10⁵ Pa)
- profondeur de formage = 20 mm.

Les paramètres de soudure de la feuille F sur le bord 5 de la coque thermoformée du contenant étaient :
- température = 150°C
- pression = 4,5 bars (4,5 x 10⁵ Pa)
- temps = 2 secondes.

Il convient de noter que les paramètres peuvent évoluer en fonction de la machine de thermoformage utilisée. Il existe en effet des tolérances plus ou moins importantes sur la mesure des paramètres selon le type de machine utilisée.

Des mesures ont été effectuées sur les barquettes correspondant au contenant C des Figures 4 et 5.

Avant soudure, la force d'adhésion entre la couche extérieure 2 en polyéthylène téréphtalate bi-orienté et la couche soudante 1 de polyéthylène haute densité était de 10 N (Newton)/15 mm.

Après soudure du cordon 4 sur le bord du film 5 de la coque thermoformée, la force de déchirure à exercer pour ouvrir le contenant était de l'ordre de 15 N/15 mm.

Après repositionnement de la structure d'obturation au niveau de la soudure sur le cordon 4 restée fixé au bord 5, une force de collage de 6 N/15 mm a été obtenue et est restée constante durant les dix essais d'ouverture-fermeture. L'emballage a été mis au réfrigérateur à une température de 4°C durant sept jours, et il n'a pas été constaté de décollement de la feuille F de la structure d'obturation par rapport au bord du film 5 du contenant.

D'autres exemples de structure selon l'invention sont fournis ci-après :
I / couche extérieure 2 en polyamide bi-orienté, d'une épaisseur de 15 micromètres ;
   couche adhésive 3 en polymère acrylique ou en adhésif "Hot melt" sur une base d'élastomère thermoplastique d'une épaisseur de 10 micromètres ;
   couche soudante 1 en polyéthylène haute densité épaisseur 20 micromètres.
II / couche extérieure 2 en PVC rigide (épaisseur 400 micromètres)/colle polyuréthane(2 micromètres)/ polyéthylène téréphtalate bi-orienté (épaisseur 12 micromètres) ;
   couche adhésive 3 : polymère acrylique d'épaisseur 10 micromètres ;
   couche soudante 1 : polyéthylène haute densité d'épaisseur 20 micromètres.
III /couche extérieure 2 en polyéthylène téréphtalate amorphe (épaisseur 400 micromètres)/colle polyuréthane (épaisseur 2 micromètres)/polyéthylène téréphtalate bi-orienté (épaisseur 12 micromètres) ;
   couche adhésive 3 : polymère acrylique ou adhésif "Hot melt" sur une base d'élastomère thermoplastique en couches d'épaisseur de 10 micromètres ;
   couche soudante 1 : polyéthylène haute densité, épaisseur de 20 micromètres.

L'invention permet donc une ouverture facile du contenant, en particulier de l'emballage, suivie d'une fermeture assurant son intégrité. L'invention peut s'appliquer à tout type d'emballage présentant au moins une zone de soudure. La conformité au contact alimentaire des couches composant la structure d'obturation, et le contenant, permet l'utilisation pour le conditionnement de produits alimentaires.

La structure d'obturation multicouche S peut être utilisée sur tout type de machine de conditionnement procédant au moins à une soudure. Contrairement aux solutions de l'art antérieur, telles que fermetures par coopération mécanique de crochets, l'invention ne nécessite pas une modification du matériel de conditionnement car la structure d'obturation multicouche se présente sous la forme d'un simple film et ne nécessite pas d'ajouter des accessoires tels que des crochets sous forme de bandes nervure/rainure ou de bandes adhésives. Avant l'ouverture, l'emballage garde toutes ses propriétés mécaniques et de barrière nécessaires à la bonne conservation du produit conditionné.

## Revendications

1. Structure d'obturation (S) pour un contenant (C) muni d'une ouverture (O), comprenant une feuille (F) soudée suivant le bord de l'ouverture du contenant, la feuille (F) étant constituée d'au moins trois couches, à savoir une couche soudante (1) appliquée et soudée suivant un cordon (4) de largeur L contre le bord de l'ouverture, une couche extérieure (2) formant barrière et une couche adhésive (3) intermédiaire, la couche soudante ayant subi une fragilisation dans la région du cordon (4), la soudure du cordon (4) de la couche soudante sur le bord de l'ouverture présentant une résistance à l'arrachement supérieure à la force d'adhésion entre couche soudante (1) et couche adhésive (3) de sorte qu'à la première opération de dégagement de l'ouverture (O) le cordon soudé (4) de la couche soudante reste en place sur le bord de l'ouverture et se sépare par déchirure du reste de la couche soudante (1) et de la couche adhésive (3), laquelle est ainsi découverte sur une zone (7) correspondant au dit cordon (4), la fermeture du contenant (C) pouvant être effectuée à nouveau par application de la zone découverte (7) de la couche adhésive contre le cordon (4) de la couche soudante restée en place,
**caractérisée en ce que** ladite couche adhésive (3) intermédiaire est formée par un dépôt de résine d'épaisseur minimale de 10 micromètres, et **en ce que** la fragilisation de ladite couche soudante dans la région du cordon (4), est réalisée par la soudure du cordon (4) par pression et mise en fusion par une barrette de soudure de manière à déformer la couche soudante (1) et la couche adhésive (3), et **en ce que** la nature de la couche extérieure (2) est telle qu'elle ne subit pas de fusion et est très peu déformée de manière permanente.

2. Structure d'obturation selon la revendication 1, **caractérisée par le fait que** la zone découverte (7) de la couche adhésive, après la première ouverture, est comprise entre deux bandes ou nappes (8, 9) de couche soudante.

3. Structure d'obturation selon la revendication 1 ou 2, **caractérisée par le fait que** la couche extérieure (2) est un film souple, en particulier d'épaisseur d'environ 50 micromètres.

4. Structure d'obturation selon la revendication 3, **caractérisée par le fait que** la couche extérieure (2) est en polyester bi-orienté.

5. Structure d'obturation selon la revendication 1 ou 2, **caractérisée par le fait que** la couche extérieure (2) est un film rigide.

6. Structure d'obturation selon l'une des revendications précédentes, **caractérisée par le fait que** la couche soudante (1) est constituée par un film de faible épaisseur, en particulier de l'ordre de 20 micro-mètres, facile à déchirer ou d'une épaisseur plus importante présentant des propriétés de déchirure facile obtenues par l'ajustement des paramètres d'extrusion ou par l'ajout de charges minérales.

7. Structure d'obturation selon l'une des revendications précédentes, **caractérisée par le fait que** la couche adhésive (3) est formée par un polymère acrylique à effet collant permanent, sous forme solide à température ambiante ou d'un adhésif "Hot melt" sur une base d'élastomère thermoplastique.

8. Structure d'obturation selon l'une des revendications précédentes, **caractérisée par le fait que** les matières composant les couches sont conformes au contact alimentaire.

9. Structure d'obturation selon l'une des revendications précédentes **caractérisée en ce que** la couche adhésive est en adhésif Hot melt sur une base d'un élastomère thermoplastique présentant un point de fusion compris entre 85 et 95°C.

10. Structure d'obturation selon l'une des revendications précédentes **caractérisée en ce que** la couche adhésive est en adhésif Hot melt sur une base d'un élastomère thermoplastique présentant une viscosité dynamique de 15 100 mPa.s à 150°C, de 11 100 mPa.s à 160°C, de 8 000 mPa.s à 170°C.

11. Structure d'obturation selon l'une des revendications précédentes **caractérisée en ce que** l'adhésif de la couche adhésive est choisi de façon à procurer une force d'adhésion d'environ 900 grammes force/cm² après 1 minute de contact et d'environ 1 100 grammes force/cm² après 7 minutes de contact, la mesure de la force d'adhésion étant réalisée à partir d'une couche de 50 micromètres d'adhésif enserrée entre deux couches de polyester et ayant subi une pression de 10.10⁵ Pa sur une surface carrée de 8 x 8 mm.

12. Structure d'obturation selon l'une des revendications précédentes **caractérisée en ce que** la couche soudante est en polyéthylène haute densité.

13. Structure d'obturation selon l'une des revendications 1 à 11 **caractérisée en ce que** les couches composant la feuille (F) sont transparentes de sorte que la feuille (F) est elle-même transparente.

14. Structure d'obturation selon l'une des revendications 1 à 11 **caractérisée en ce que** la couche soudante est en polyéthylène haute densité et **en ce que** les couches composant la feuille (F) sont transparentes de sorte que la feuille (F) est elle-même transparente.

15. Structure d'obturation selon l'une des revendications 1 à 14 **caractérisée en ce que** la pression et mise en fusion est effectuée à l'aide d'une barrette (6) chauffante, appliquée côté de la couche extérieure.

16. Contenant muni d'une ouverture fermée par une feuille soudée suivant le bord de l'ouverture **caractérisé par le fait que** la feuille est constituée par une structure d'obturation conforme à l'une des revendications précédentes.

17. Procédé d'obturation d'un contenant muni d'une ouverture par une feuille soudée suivant le bord de l'ouverture, dans lequel on utilise une feuille (F) constituée d'au moins trois couches, à savoir une couche soudante (1) à appliquer contre le bord de l'ouverture, une couche extérieure (2) formant barrière et une couche adhésive intermédiaire (3), et qu'on réalise la soudure de la couche soudante (1) sur le bord de l'ouverture suivant un cordon (4) de largeur L présentant une résistance à l'arrachement supérieure à la force d'adhésion entre couche soudante (1) et couche adhésive (3), de sorte qu'à la première opération de dégagement de l'ouverture (O) du contenant, le cordon soudé (4) de la couche soudante reste en place sur le bord de l'ouverture et se sépare essentiellement par déchirure du reste de la couche soudante et de la couche adhésive (3),
**caractérisé en ce que** ladite couche adhésive (3) intermédiaire est formée par un dépôt de résine d'épaisseur minimale de 10 micromètres, et **en ce que** la soudure est effectuée par pression et mise en fusion par une barrette de soudure de manière à provoquer une fragilisation par déformation de la couche soudante (1) et de la couche adhésive (3) dans la région du cordon (4), et **en ce que** la nature de la couche extérieure (2) est telle qu'elle ne subit pas de fusion et est très peu déformée de manière permanente.

18. Procédé d'obturation selon la revendication 17, **caractérisé par le fait que**, pour réaliser la feuille multicouche (F), la couche adhésive (3) est formée par une résine adhésive extrudée à chaud entre la couche extérieure (2) et la couche soudante (1).

19. Procédé d'obturation selon la revendication 17, **caractérisé par le fait que** la feuille (F) multicouche est préparée en déposant à chaud la couche adhésive (3) sur la couche extérieure (2) avant de calandrer la couche soudante (1).

20. Procédé selon l'une des revendications 17 à 19 **caractérisé en ce que** la couche adhésive est en adhésif Hot melt sur une base d'un élastomère thermoplastique présentant un point de fusion compris entre 85 et 95°C.

21. Procédé selon l'une des revendications 17 à 20 **caractérisé en ce que** la couche adhésive est en adhésif Hot melt sur une base d'un élastomère thermoplastique présentant une viscosité dynamique de 15 100 mPa.s à 150°C, de 11 100 mPa.s à 160°C, de 8 000 mPa.s à 170°C.

22. Procédé selon l'une des revendications 17 à 21 **caractérisé en ce que** la couche soudante est en polyéthylène haute densité.

23. Procédé selon l'une des revendications 17 à 22 **caractérisé en ce que** les couches composant la feuille (F) sont transparentes de sorte que la feuille (F) est elle-même transparente.

24. Procédé selon l'une des revendications 17 à 23 **caractérisé en ce que** la couche extérieure est un film souple, en particulier d'épaisseur d'environ 50 micromètres.

25. Procédé selon l'une des revendications 17 à 24 **caractérisé en ce que** la couche extérieure est en polyester bi-orienté.

26. Procédé selon l'une des revendications 17 à 23 **caractérisé en ce que** la couche extérieure est un film rigide.

27. Procédé selon l'une des revendications 17 à 26 **caractérisé en ce que** la couche soudante est constituée par un film de faible épaisseur, en particulier de l'ordre de 20 micro-mètres, facile à déchirer ou d'une épaisseur plus importante présentant des propriétés de déchirure facile obtenues par l'ajustement des paramètres d'extrusion ou par l'ajout de charges minérales.

28. Procédé selon l'une des revendications 17 à 27 **caractérisé en ce que** la pression et mise en fusion est effectuée à l'aide d'une barrette (6) chauffante, appliquée côté de la couche extérieure.

29. Procédé selon la revendication 28 **caractérisé en ce que** les conditions de soudure sont: température 150°C, pression 4,5 bar et temps 2 sec.

## Claims

1. Sealing structure (S) for a container (C) provided with an opening (0), comprising a sheet (F) welded around the edge of the opening of the container, the sheet (F) consisting of at least three layers, namely a welding layer (1) pressed against and welded as a bead (4) to the edge of the opening, a barrier-forming exterior layer (2) and an intermediate adhesive layer (3), the welding layer having been weakened in the region of the bead (4), the weld between the bead (4) of the welding layer and the edge of the opening having a tear strength greater than the strength of adhesion between the welding layer (1) and the adhesive layer (3) so that, at the first occasion of exposing the opening (0), the welded bead (4) of the welding layer remains in place around the edge of the opening and separates, by tearing, from the rest of the welding layer (1) and from the adhesive layer (3), which adhesive layer is thus uncovered over an area (7) corresponding to the said bead (4), it being possible for the container (C) to be sealed again by pressing the uncovered area (7) of the adhesive layer against the bead (4) of the welding layer that has remained in place,
**characterized in that** said intermediate adhesive layer (3) is formed by depositing a resin to a minimum thickness of 10 micrometres and **in that** the said weakening of the welding layer in the region of the bead takes place by the welding of the bead (4) by pressure and melting using a hot tool so as to deform the welding layer (1) and the adhesive layer (3), and **in that** the nature of the exterior layer (2) is such that it does not undergo melting and is very little permanently deformed.

2. Sealing structure according to Claim 1, **characterized in that** the uncovered area (7) of the adhesive layer, after the first opening, is between two bands or strips (8, 9) of the welding layer.

3. Sealing structure according to Claim 1 or 2, **characterized in that** the exterior layer (2) is a flexible film, in particular of thickness of about 50 micrometers.

4. Sealing structure according to Claim 3, **characterized in that** the exterior layer (2) is made of biaxially oriented polyester.

5. Sealing structure according to Claim 1 or 2, **characterized in that** the exterior layer (2) is a rigid film.

6. Sealing structure according to one of the preceding claims, **characterized in that** the welding layer (1) consists of a thin film, the thickness being about 20 micrometres, which is easy to tear, or of a thicker film having easy-tear properties obtained by adjusting the extrusion parameters or by adding mineral fillers.

7. Sealing structure according to one of the preceding claims, **characterized in that** the adhesive layer (3) is formed by a permanently tacky acrylic polymer, which is solid at room temperature, or by a hot-melt adhesive based on a thermoplastic elastomer.

8. Sealing structure according to one of the preceding claims, **characterized in that** the materials of which the layers are composed comply with food-contact regulations.

9. Sealing structure according to one of the preceding claims, **characterized in that** the adhesive layer is made of a hot-melt adhesive based on a thermoplastic elastomer having a melting point of between 85 and 95°C.

10. Sealing structure according to one of the preceding claims, **characterized in that** the adhesive layer is made of a hot-melt adhesive based on a thermoplastic elastomer having a dynamic viscosity of 15,100 mPa.s at 150°C, of 11,100 mPa.s at 160°C and of 8000 mPa.s at 170°C.

11. Sealing structure according to one of the preceding claims, **characterized in that** the adhesive of the adhesive layer is chosen so as to provide an adhesive strength of approximately 900 grams force/cm² after 1 minute of contact and approximately 1100 grams force/cm² after 7 minutes of contact, the adhesive strength being measured using a 50 micrometre layer of adhesive sandwiched between two polyester layers and a pressure of 10 x 10⁵ Pa having been applied on an 8 x 8 mm square area.

12. Sealing structure according to one of the preceding claims, **characterized in that** the welding layer is made of high-density polyethylene.

13. Sealing structure according to one of Claims 1 to 11, **characterized in that** the layers of which the sheet (F) is composed are transparent so that the sheet (F) itself is transparent.

14. Sealing structure according to one of Claims 1 to 11, **characterized in that** the welding layer is made of high-density polyethylene and **in that** the layers of which the sheet (F) is composed are transparent so that the sheet (F) itself is transparent.

15. Sealing structure according to one of Claims 1 to 14, **characterized in that** the pressure and melting is performed using a hot tool (6), applied at the external layer side.

16. Container provided with an opening sealed by a sheet welded around the edge of the opening, **characterized in that** the sheet consists of a sealing structure according to one of the preceding claims.

17. Method of sealing a container provided with an opening by a sheet welded around the edge of the opening, **characterized in that** a sheet (F) is used which consists of at least three layers, namely a welding layer (1) to be pressed against the edge of the opening, a barrier-forming exterior layer (2) and an intermediate adhesive layer (3 and in which the weld of the welding layer (1) to the edge of the opening along a bead (4) of width L having a tear strength greater than the strength of adhesion between the welding layer (1) and the adhesive layer (3), so that, at the first occasion of exposing the opening (0) of the container, the welded bead (4) of the welding layer remains in place around the edge of the opening and separates, essentially by tearing, from the rest of the welding layer and from the adhesive layer (3),
**characterized in that** said intermediate adhesive layer (3) is formed by depositing a resin to a minimum thickness of 10 micrometres and **in that** the welding is carried out by pressure and melting using a hot tool (6) so as to weaken by deformation the welding layer (1) and the adhesive layer (3) in the region of the bead (4) and **in that** the nature of the exterior layer (2) is such that it does not undergo melting and is very little permanently deformed.

18. Sealing method according to Claim 17, **characterized in that**, in order to produce the multilayer sheet (F), the adhesive layer (3) is formed by an adhesive resin extruded, hot, between the exterior layer (2) and the welding layer (1).

19. Sealing method according to Claim 17, **characterized in that** the multilayer sheet (F) is produced by depositing, hot, the adhesive layer (3) on the exterior layer (2) before calendering the welding layer (1).

20. Method according to one of Claims 17 to 19, **characterized in that** the adhesive layer is made of a hot-melt adhesive based on a thermoplastic elastomer having a melting point of between 85 and 95°C.

21. Method according to one of Claims 17 to 20, **characterized in that** the adhesive layer is made of a hot-melt adhesive based on a thermoplastic elastomer having a dynamic viscosity of 15,100 mPa.s at 150°C, of 11,100 mPa.s at 160°C and of 8000 mPa.s at 170°C.

22. Method according to one of Claims 17 to 21, **characterized in that** the welding layer is made of high-density polyethylene.

23. Method according to one of Claims 17 to 22, **characterized in that** the layers of which the sheet (F) is composed are transparent so that the sheet (F) itself is transparent.

24. Method according to one of Claims 17 to 23, **characterized in that** the exterior layer is a flexible film, in particular of a thickness of about 50 micrometres.

25. Method according to one of Claims 17 to 24, **characterized in that** the exterior layer is made of biaxially oriented polyester.

26. Method according to one of Claims 17 to 23, **characterized in that** the exterior layer is a rigid film.

27. Method according to one of Claims 17 to 26, **characterized in that** the welding layer consists of a thin film, the thickness being about 20 micrometres, which is easy to tear, or of a thicker film having easy-tear properties obtained by adjusting the extrusion parameters or by adding mineral fillers.

28. Method according to one of Claims 17 to 27, **characterized in that** the pressure and melting is performed using a hot tool (6), applied at the external layer side.

29. Method according to claim 28, **characterized in that** the welding conditions are: temperature = 150°C, pressure = 4.5 bar and time = 2 seconds.

## Patentansprüche

1. Verschlussstruktur (S) für einen Behälter (C) mit einer Öffnung (O), die eine Folie (F) aufweist, welche entlang des Rands der Öffnung des Behälters angeschweißt ist, wobei die Folie (F) aus mindestens drei Schichten besteht, nämlich einer Schweißschicht (1), die entlang eines Wulstes (4) einer Breite L auf dem Öffnungsrand aufgelegt und angeschweißt ist, einer Außenschicht (2), die eine Barriere bildet, und einer dazwischen liegenden Klebeschicht (3), wobei die Schweißschicht im Bereich des Wulstes (4) mit einer Schwachstelle versehen wurde, und wobei die Schweißnaht des Wulstes (4) der Schweißschicht auf dem Rand der Öffnung eine Abreißfestigkeit aufweist, die größer ist als die Klebekraft zwischen der Schweißschicht (1) und der Klebeschicht (3), so dass beim ersten Freilegen der Öffnung (O) der Schweißwulst (4) der Schweißschicht auf dem Rand der Öffnung bleibt und sich vom Rest der Schweißschicht (1) und der Klebeschicht (3) durch Zerreißen trennt, wodurch letztere in einem dem Wulst (4) entsprechenden Bereich (7) freigelegt wird, wobei der erneute Verschluss des Behälters (C) durch Auflegen des freigelegten Bereichs (7) der Klebeschicht gegen den an Ort und Stelle gebliebenen Wulst (4) der Schweißschicht durchgeführt werden kann,
**dadurch gekennzeichnet, dass** die zwischenliegende Klebeschicht (3) durch eine Beschichtung mit einem Harz einer Mindeststärke von 10 Mikrometern gebildet wird, und dass die Erzeugung der Schwachstelle der Schweißschicht im Bereich des Wulstes (4) durch Schweißen des Wulstes (4), Druck und Schmelzen mit Hilfe eines Schweißstabs derart erfolgt, dass die Schweißschicht (1) und die Klebeschicht (3) verformt werden, und dadurch, dass die Beschaffenheit der Außenschicht (2) so ist, dass sie nicht schmilzt und nur sehr wenig dauerhaft verformt wird.

2. Verschlussstruktur nach Anspruch 1, **dadurch gekennzeichnet, dass** der nach der ersten Öffnung freigelegte Bereich (7) der Klebeschicht zwischen zwei Bändern oder Flächen (8,9) der Schweißschicht liegt.

3. Verschlussstruktur nach Anspruch 1 oder 2, **dadurch gekennzeichnet, dass** die Außenschicht (2) ein geschmeidiger Film, insbesondere mit einer Stärke von ungefähr 50 Mikrometern, ist.

4. Verschlussstruktur nach Anspruch 3, **dadurch gekennzeichnet, dass** die Außenschicht (2) aus bi-orientiertem Polyester besteht.

5. Verschlussstruktur nach Anspruch 1 oder 2, **dadurch gekennzeichnet, dass** die Außenschicht (2) aus einem steifen Film besteht.

6. Verschlussstruktur nach einem der vorangehenden Ansprüche, **dadurch gekennzeichnet, dass** die Schweißschicht (1) aus einem leicht zerreißbaren Film geringer Stärke besteht, insbesondere in der Größenordnung von 20 Mikrometern oder einem Film größerer Stärke, der Eigenschaften einer leichten Zerreißbarkeit aufweist, die durch die Einstellung der Extrusionsparameter oder durch Hinzufügung von mineralischen Füllstoffen erhalten werden.

7. Verschlussstruktur nach einem der vorangehenden Ansprüche, **dadurch gekennzeichnet, dass** die Klebeschicht (3) aus einem bei Umgebungstemperatur festen Acrylpolymer mit dauerhafter Klebewirkung oder aus einem "Hot Melt"-Klebstoff auf der Basis eines thermoplastischen Elastomers besteht.

8. Verschlussstruktur nach einem der vorangehenden Ansprüche, **dadurch gekennzeichnet, dass** die die Schichten bildenden Materialien für den Kontakt mit Lebensmitteln geeignet sind.

9. Verschlussstruktur nach einem der vorangehenden Ansprüche, **dadurch gekennzeichnet, dass** die Klebeschicht aus Hot-Melt-Klebstoff auf der Basis eines thermoplastischen Elastomers besteht, dessen Schmelzpunkt zwischen 85 und 95°C liegt.

10. Verschlussstruktur nach einem der vorangehenden Ansprüche, **dadurch gekennzeichnet, dass** die Klebeschicht aus Hot-Melt-Klebstoff auf der Basis eines thermoplastischen Elastomers besteht, das eine dynamische Viskosität von 15 100 mPa.s bei 150°C, von 11 100 mPa.s bei 160°C und von 8 000 mPa.s bei 170°C aufweist.

11. Verschlussstruktur nach einem der vorangehenden Ansprüche, **dadurch gekennzeichnet, dass** der Klebstoff der Klebeschicht so gewählt wird, dass nach einer Minute Kontakt eine Klebekraft von ungefähr 900 Pond/cm² und nach 7 Minuten Kontakt von ungefähr 1 100 Pond/cm² erhalten wird, wobei die Messung der Klebekraft ausgehend von einer zwischen zwei Polyesterschichten eingeklemmten Schicht von 50 Mikrometern Klebstoff, die auf einer quadratischen Fläche von 8 x 8 mm einem Druck von 10.10⁵ Pa ausgesetzt wurde, durchgeführt wird.

12. Verschlussstruktur nach einem der vorangehenden Ansprüche, **dadurch gekennzeichnet, dass** die Schweißschicht aus Polyethylen hoher Dichte ist.

13. Verschlussstruktur nach einem der Ansprüche 1 bis 11, **dadurch gekennzeichnet, dass** die die Folie (F) bildenden Schichten transparent sind, so dass die Folie (F) selbst transparent ist.

14. Verschlussstruktur nach einem der Ansprüche 1 bis 11, **dadurch gekennzeichnet, dass** die Schweißschicht aus Polyethylen hoher Dichte ist und dass die die Folie (F) bildenden Schichten transparent sind, so dass die Folie (F) selbst transparent ist.

15. Verschlussstruktur nach einem der Ansprüche 1 bis 14, **dadurch gekennzeichnet, dass** der Druck und das Schmelzen mit Hilfe eines Heizstabs (6) erfolgen, der auf der Seite der Außenschicht angewandt wird.

16. Behälter mit einer durch eine Folie verschlossenen Öffnung, die entlang des Rands der Öffnung angeschweißt ist, **dadurch gekennzeichnet, dass** die Folie aus einer Verschlussstruktur gemäß einem der vorangehenden Ansprüche gebildet wird.

17. Verfahren zum Verschließen eines mit einer Öffnung versehenen Behälters durch eine Folie, die entlang des Rands der Öffnung angeschweißt ist, wobei eine Folie (F) verwendet wird, die aus mindestens drei Schichten besteht, nämlich einer gegen den Rand der Öffnung anzulegenden Schweißschicht (1), einer eine Barriere bildenden Außenschicht (2) und einer dazwischen liegenden Klebeschicht (3), und wobei die Schweißverbindung der Schweißschicht (1) mit dem Rand der Öffnung entlang eines Wulstes (4) einer Breite L durchgeführt wird, der eine Abreißfestigkeit aufweist, die größer ist als die Klebekraft zwischen der Schweißschicht (1) und der Klebeschicht (3), so dass beim ersten Freilegen der Öffnung (O) des Behälters der angeschweißte Wulst (4) der Schweißschicht auf dem Rand der Öffnung bleibt und sich im Wesentlichen durch Zerreißen vom Rest der Schweißschicht und der Klebeschicht (3) trennt,
**dadurch gekennzeichnet, dass** die zwischenliegende Klebeschicht (3) durch eine Beschichtung mit einem Harz einer minimalen Stärke von 10 Mikrometern gebildet wird, und dass die Schweißverbindung durch Druck und Schmelzen mit Hilfe eines Schweißstabs derart erfolgt, dass eine Schwachstelle durch Verformung der Schweißschicht (1) und der Klebeschicht (3) im Bereich des Wulstes (4) erzeugt wird und dadurch, dass die Beschaffenheit der Außenschicht (2) so ist, dass sie nicht schmilzt und nur sehr wenig dauerhaft verformt wird.

18. Verfahren zum Verschließen nach dem Anspruch 17, **dadurch gekennzeichnet, dass** zur Herstellung der mehrlagigen Folie (F) die Klebeschicht (3) durch Warmextrusion eines Klebeharzes zwischen der Außenschicht (2) und der Schweißschicht (1) gebildet wird.

19. Verfahren zum Verschließen nach dem Anspruch 17, **dadurch gekennzeichnet, dass** die mehrlagige Folie (F) hergestellt wird, indem die Klebeschicht (3) warm auf die Außenschicht (2) aufgebracht wird, bevor die Schweißschicht (1) kalandiert wird.

20. Verfahren nach einem der Ansprüche 17 bis 19, **dadurch gekennzeichnet, dass** die Klebeschicht aus Hot-Melt-Klebstoff auf der Basis eines thermoplastischen Elastomers besteht, der einen Schmelzpunkt zwischen 85 und 95°C aufweist.

21. Verfahren nach einem der Ansprüche 17 bis 20, **dadurch gekennzeichnet, dass** die Klebeschicht aus Hot-Melt-Klebstoff auf der Basis eines thermoplastischen Elastomers besteht, das eine dynamische Viskosität von 15 100 mPa.s bei 150°C, von 11 100 mPa. s bei 160°C und von 8 000 mPa.s bei 170°C aufweist.

22. Verfahren nach einem der Ansprüche 17 bis 21, **dadurch gekennzeichnet, dass** die Schweißschicht aus Polyethylen hoher Dichte ist.

23. Verfahren nach einem der Ansprüche 17 bis 22, **dadurch gekennzeichnet, dass** die die Folie (F) bildenden Schichten transparent sind, so dass die Folie (F) selbst transparent ist.

24. Verfahren nach einem der Ansprüche 17 bis 23, **dadurch gekennzeichnet, dass** die Außenschicht ein geschmeidiger Film, insbesondere mit einer Stärke von ungefähr 50 Mikrometern, ist.

25. Verfahren nach einem der Ansprüche 17 bis 24, **dadurch gekennzeichnet, dass** die Außenschicht aus bi-orientiertem Polyester ist.

26. Verfahren nach einem der Ansprüche 17 bis 23, **dadurch gekennzeichnet, dass** die Außenschicht ein steifer Film ist.

27. Verfahren nach einem der Ansprüche 17 bis 26, **dadurch gekennzeichnet, dass** die Schweißschicht aus einem Film geringer Stärke besteht, insbesondere der Größenordnung von 20 Mikrometern, der leicht zerreißbar ist, oder einem Film größerer Stärke, der Eigenschaften einer leichten Zerreißbarkeit aufweist, die durch die Einstellung der Extrusionsparameter oder durch Hinzufügung von mineralischen Füllstoffen erhalten werden.

28. Verfahren nach einem der Ansprüche 17 bis 27, **dadurch gekennzeichnet, dass** der Druck und das Schmelzen mit Hilfe eines Heizstabs (6) erfolgen, der auf der Seite der Außenschicht angewandt wird.

29. Verfahren nach Anspruch 28, **dadurch gekennzeichnet, dass** die Schweißbedingungen folgende sind: Temperatur: 150°C, Druck: 4,5 bar und Zeit: 2 Sekunden.
